# EUROPÄISCHE PATENTANMELDUNG

(11) **EP 4 299 477 A1**
(43) Veröffentlichungstag der Anmeldung: **03.01.2024**
(21) Anmeldenummer: 23181955.8
(22) Anmeldetag: 28.06.2023
(51) Int. Cl.: B65G 13/10, B65G 39/02, B65G 47/54, B65G 47/22, B65G 47/244, B65G 47/28

(54) **FÖRDERANLAGE MIT EINER VORRICHTUNG ZUM LENKEN VON LIEGEND GEFÖRDERTEN FÖRDERGÜTERN**

(30) Priorität: 29.06.2022 CH 7882022
(71) Anmelder: FERAG AG, 8340 Hinwil (CH)
(72) Erfinder: FENILE, Roberto, 8340 Hinwil (CH)
(74) Vertreter: Frei Patent Attorneys

(57) **Zusammenfassung**

Die Erfindung betrifft eine antreibbare Rolle (1) mit einer Mantelfläche (2) für den Einsatz in einer Förderanlage (21) zum Lenken von liegend über die Rolle (1) hinweg geförderten Fördergüter (20) sowie eine Anordnung, enthalten eine solche Rolle (1). Die Rolle (1) ist mit einer Unterdruckeinrichtung (11) verbindbar und weist zum Erzeugen eines Unterdrucks im Bereich der Mantelfläche (2) mindestens eine Unterdrucköffnung (3) auf, welche in die Mantelfläche (2) der Rolle (1) mündet.

## Beschreibung

Die Erfindung liegt auf dem Gebiet der Fördertechnik, insbesondere der Intralogistik und betrifft eine antreibbare Rolle für den Einsatz in einer Förderanlage zum Lenken von liegend geförderten Fördergütern.

Ferner betrifft die Erfindung eine Anordnung mit mindestens einer antreibbaren Rolle für den Einsatz in einer Förderanlage zum Lenken von liegend über die Anordnung geförderten Fördergüter sowie eine Förderanlage mit einer Fördervorrichtung zum liegenden Fördern von Fördergütern und mit einer genannten Anordnung zum Lenken der liegend geförderten Fördergiiter.

Des Weiteren betrifft die Erfindung auch ein Verfahren zum Lenken von Fördergütern mit einer vorgenannten Anordnung.

Antreibbare Rollen für den Einsatz in einer Förderanlage zum Lenken von liegend geförderten Fördergüter sowie entsprechende Förderanlagen, welche solche Rollen enthalten, sind aus dem Stand der Technik bekannt.

Zum Lenken der Fördergüter werden diese über die Anordnung mit den angetriebenen Rollen gefördert. Durch den Aufliegedruck, mit welchem die Fördergüter den angetriebenen Rollen aufliegen, wird eine Mitnahmekraft von den Rollen auf die Fördergüter übertragen. Die Bewegungsrichtung der den Rollen aufliegenden Fördergütern kann nun mittels Schwenken der Rollen beeinflusst und geändert werden.

So beschreibt beispielsweise die DE 39 10 524 C2 eine Rollenweiche zwischen Abschnitten von Förderbahnen zum Sortieren von Fördergütern, wie Paketen. Die Rollenweiche besteht aus einer Reihe von mehreren sich über die gesamte Breite der Förderbahn erstreckenden und quer zur Förderrichtung angeordneten, angetriebenen Rollen. Die Rollen, welche über die Förderbahn hinausragen, sind einzeln in Wangen drehbar gelagert. Durch Schwenken der angetriebenen Rollen werden die Fördergüter aus ihrer Förderrichtung abgelenkt. Die Rollenweiche findet Einsatz an einer Ausschleusstelle zum Ausschleusen von Fördergiitern.

Die US 3,254,752 beschreibt ebenfalls eine Rollenweiche, welche an einer sich verzweigenden Fördervorrichtung angeordnet ist und die Fördergüter gezielt auf eine der beiden stromabwärts folgenden Förderbahnen der sich verzweigenden Fördervorrichtung lenkt.

Die WO 2015/200460 A1 beschreibt eine tellerförmige Rollenbaugruppe mit einer Rolle, welche über ein Zahnradgetriebe um eine senkrecht zur Förderebene angeordnete Achse schwenkbar ist. Die dazugehörige Förderweiche weist eine Mehrzahl von in Reihen und Kolonnen angeordneten und in eine Förderfläche eingelassenen Rollenbaugruppen auf.

Das Prinzip hinter rollenbasierten Förderweichen besteht darin, dass die Fördergüter über die Rollen gefördert werden und diesen mit ihrem Eigengewicht aufliegen. Dabei üben die angetriebenen Rollen eine Mitnahmekraft auf die Fördergüter aus, derart dass die Fördergüter parallel zur Schwenkposition der Rollen bzw. in Tangentialdrehrichtung der Rollen mitbewegt werden. Die Tangentialdrehrichtung entspricht der Tangentialrichtung der Drehung im Scheitelpunkt der in den Förderraum ragenden Rolle.

Je nach Schwenkposition der Rollen werden nun die Fördergüter zu einer der stromabwärts folgenden Förderbahnen hingelenkt.

Handelt es sich bei den Fördergütern um vergleichsweise leichte Stückgüter, so kann der Aufliegedruck und entsprechend die Reibhaftung zu gering sein, als dass die angetriebene Rolle eine genügende Mitnahmekraft auf das Fördergut auszuüben vermag. Das betreffende Fördergut bewegt sich aufgrund seiner Trägheit weiter in der bisherigen Förderrichtung.

Diese Problematik wird allgemein durch eine Zunahme der Förderleistung und entsprechend der Fördergeschwindigkeit noch zusätzlich verschärft, indem Folge dessen höhere Trägheitskräfte und sogar aerodynamische Effekte auftreten, welche der Reibhaftung entgegenwirken.

Auch flexible, biegsame Fördergüter, wie Kleidungsstücke oder Fördergüter in flexiblen Verpackungen, wie folierte Fördergüter, können mitunter eine schlechte Haftreibung zu den angetriebenen Rollen ausbilden, so dass die Rollen die Fördergüter nicht oder nur unzureichend in die gewünschte Richtung zu lenken vermögen.

Dies rührt unter anderem daher, dass solche Fördergüter nicht ausschliesslich den aus der Auflagefläche vorstehenden Rollen aufliegen, wie dies mit starren Fördergütern der Fall ist, sondern auch der Auflagefläche zwischen den Rollen aufliegen. Entsprechend liegen die Fördergüter nicht mit ihrem ganzen Gewicht den Rollen auf.

Insbesondere die Kombination von leichten Fördergütern mit flexiblen, biegsamen Eigenschaften bzw. mit einer flexiblen Verpackungshülle sind für die Verarbeitung mittels Rollenweichen, wie sie aus dem Stand der Technik bekannt sind, nicht besonders geeignet.

Durch den zunehmenden Versandhandel mit Kleidungsstücken, welche beispielsweise in Plastikhüllen verpackt kommissioniert werden, ist das Bedürfnis gross, auch leichte, biegsame Fördergüter bzw. in flexiblen Folien verpackte Fördergüter mittels Rollenweichen störungsfrei gelenkt zu fördern.

Es ist daher eine Aufgabe vorliegender Erfindung, eine antreibbare und insbesondere schwenkbare Rolle vorzuschlagen, mittels welcher sich auch leichte, biegsame Fördergüter bzw. in flexiblen Folien verpackte Fördergüter, welche liegend gefördert werden, einwandfrei in einer Förderebene lenken lassen.

Ferner soll die antreibbare Rolle möglichst wenig Anpassungen am Grundprinzip von rollenbasierten Lenkvorrichtungen für Förderanlagen zum liegenden Fördern von Fördergütern erfordern.

Ferner ist es eine Aufgabe vorliegender Erfindung, eine rollenbasierten Lenkvorrichtungen für Förderanlagen zum liegenden Fördern von Fördergütern vorzuschlagen, welche mit bereits bestehenden Einrichtungen der Förderanlage betrieben werden kann.

Wenigstens eine Aufgabe wird mit den Merkmalen der Ansprüche 1, 10 und 19 gelöst. Die abhängigen Ansprüche, die Beschreibung und die Figuren beinhalten besondere Ausführungsformen und Weiterbildungen der Erfindung.

Die antreibbare Rolle ist für den Einsatz in einer Förderanlage zum Lenken von liegend geförderten Fördergüter ausgelegt.

Mit Lenken ist unter anderem die Ausübung einer Richtungsänderung auf das Fördergut während der Förderung gemeint. Die Richtungsänderung ist insbesondere parallel zu einer Förderfläche bzw. Förderebene. Das Lenken kann z. B. ein Ablenken, Umlenken oder Positionieren bzw. Neupositionieren auf dem Förderorgan sein. Der Begriff Lenken kann auch ein Positionieren des Fördergutes parallel zur Hauptförderrichtung mittels erfindungsgemässer Anordnung umfassen.

Die Rolle, welche eine Mantelfläche ausbildet, ist erfindungsgemäss mit einer Unterdruckeinrichtung verbindbar und weist zum Erzeugen eines Unterdrucks im Bereich der Mantelfläche mindestens eine Unterdrucköffnung auf, welche in die Mantelfläche der Rolle mündet. Das heisst, im Bereich der Mantelfläche ist mindestens eine Unterdrucköffnung angeordnet. Der Begriff Unterdrucköffnung umfasst sowohl das Öffnungsloch in der Mantelfläche als auch den dazugehörigen Kanal, welcher vom Öffnungsloch in der Mantelfläche zur Achse führt.

Die Rolle weist eine Anschlussschnittstelle zum Anschliessen an eine Unterdruckquelle bzw. an einen Unterdruckerzeuger auf. An die Anschlussschnittstelle ist insbesondere eine flexible Schlauchleitung angeschlossen, welche in der Lage ist eine Schwenkbewegung der Rolle aufzunehmen.

Die antreibbare Rolle mit der mindestens eine Unterdrucköffnung ist zur Ausübung einer Haltekraft auf ein der angetriebenen Rolle aufliegendes Fördergut ausgelegt. Die Haltekraft auf das der Rolle aufliegenden Fördergut wird hierbei von einem im Bereich der Unterdrucköffnung erzeugten Unterdruck ausgeübt.

Die Rolle kann z. B. einen maximalen Aussendurchmesser von 50 bis 90 mm aufweisen.

Das Fördergut ist insbesondere ein Stückgut bzw. eine Einzelware. Liegend geförderte Fördergüter werden auch als Liegeware bezeichnet.

Das Fördergut kann ein starres Stückgut, wie Paket, sein. Das Fördergut kann ein flexibles Stückgut, wie ein Kleidungsstück sein. Das Fördergut kann ein in einer flexiblen Verpackungshülle verpacktes Fördergut sein. Die flexible Verpackungshülle kann z. B. aus Kunststoff, Kraftpapier oder einem Schichtverbund sein. Das Fördergut kann ein foliertes Fördergut sein. Das Fördergut kann insbesondere ein in einer Plastikhülle verpacktes bzw. foliertes Kleidungsstück sein. Das Fördergut kann ein Druckprodukt sein, welche z. B. foliert ist. Das Fördergut kann ein Brief sein.

Ferner sollen auch lose auf dem Förderorgan aufliegende Förderschalen bzw. Förderbehälter mit einer darin transportierten Ware unter die Begrifflichkeit "Fördergut" fallen.

Durch den erzeugten Unterdruck wird an der mindestens einen Unterdrucköffnung im Bereich der Mantelfläche insbesondere ein Saugzug generiert, welcher auf das der Rolle aufliegende Fördergut, bzw. auf dessen Aussenhülle wirkt. Die Unterdrücköffnungen können entsprechend auch als Saugöffnungen betrachtet werden.

Der Unterdruck bzw. Saugzug wirkt besonders gut bei flexiblen Fördergütern bzw. bei Fördergütern mit einer flexiblen Verpackungshülle, welche sich aufgrund ihrer Biegsamkeit der Mantelfläche der Rolle anschmiegen und so die mindestens eine Unterdrucköffnung vollständig überdecken. Durch den Saugzug wird die flexible Oberfläche bzw. Verpackungshülle des Fördergutes zur Unterdrucköffnung hingezogen, wodurch diese verschlossen wird. Dies führt wiederum zu einer verbesserten Haftung des Fördergutes an der Rolle.

Der Begriff "Rolle" umfasst insbesondere auch Räder, wie Scheibenräder, Walzen, kugelförmige Rotationskörper oder Rotationskörper mit einer sphärischen Mantelfläche.

Gemäss einer Weiterbildung der Erfindung enthält die Rolle eine (physische) Achse mit einem Innenhohlraum und einen um die Achse drehbar gelagerten, ringförmigen Rollenkörper, welcher die Mantelfläche ausbildet. Der Rollenkörper ist entsprechend um eine parallel zur Achse verlaufende, geometrischen Drehachse drehbar gelagert.

Die Anschlussschnittstelle zum Unterdruckerzeuger ist insbesondere an einem axialen Ende der Achse angeordnet.

Der Rollenkörper ist insbesondere über entsprechende Lager, wie Kugellager, drehbar auf der Achse gelagert. Der Rollenkörper kann auch über eine als Gleitlager ausgebildete Lagerbuchse drehbar auf der Achse gelagert sein.

Zwischen dem Rollenkörper und der Achse kann eine Spaltdichtung ausgebildet sein.

Mehrere, z. B. zwei, insbesondere parallel zur Drehachse nebeneinander angeordnete Rollen können eine gemeinsame Achse aufweisen. Entsprechend sind die Rollenkörper der einzelnen Rollen voneinander beabstandet entlang der Achse angeordnet. Der Unterdruck an den Unterdrucköffnungen der Rollen wird entsprechend über den gemeinsamen Innenhohlraum angelegt. Entsprechend weisen die Rollen auch eine gemeinsame Anschlussschnittstelle zum Unterdruckerzeuger auf.

Die Achse weist mindestens eine vom Innenhohlraum nach aussen zum ringförmigen Rollenkörper führende Durchlassöffnung auf. Die Durchlassöffnung führt insbesondere radial nach aussen. Die Durchlassöffnung ist mit dem Innenhohlraum der Achse verbunden. Die Durchlassöffnung ist insbesondere ortsfest bzw. stationär.

Die mindestens eine Durchlassöffnung bildet mit der mindestens einen Unterdrucköffnung in einem definierten Drehstellungsbereich des Rollenkörpers relativ zur Achse insbesondere einen durchgängigen Kanal aus.

Der Drehstellungsbereich kommt einem, dem Förderraum zugewandten Kreisbogen gleich, welchen die mindestens eine Unterdrucköffnung mit Drehung der Rolle überstreicht, und in welchem ein durchgängiger Kanal ausgebildet wird. Der Drehstellungsbereich entspricht daher einem Drehwinkelbereich, welcher einen Kreissektor mit dem oben genannten Kreisbogen aufspannt.

Ein im Innenhohlraum angelegter Unterdruck wirkt über den durchgängigen Kanal bis zur Unterdrucköffnung in der Mantelfläche des Rollenkörpers.

Die Durchlassöffnung ist insbesondere radial nach aussen zum Förderraum der Fördergüter hin ausgerichtet. Die mindestens eine Unterdrucköffnung ist insbesondere radial nach aussen zur Mantelfläche hin ausgerichtet.

Als Förderraum ist jener dreidimensionale Raum zu verstehen, durch welchen die Fördergüter gefördert werden, bzw. welchen die Fördereinheiten während ihrer Förderung beanspruchen. Der Förderraum wird gegen unten durch ein Förderorgan bzw. Auflageorgan begrenzt.

Entlang der Achse können mehrere voneinander beabstandete Durchlassöffnungen in Reihe angeordnet sein. Diese sind insbesondere gleich ausgerichtet. Anstelle von mehreren Durchlassöffnungen kann auch ein sich entlang der Achse erstreckender Schlitz vorgesehen sein. Die Durchlassöffnungen bzw. der Schlitz bilden mit Unterdrucköffnungen, welche entlang der Drehachse nebeneinander angeordnet sind, in einem definierten Drehstellungsbereich durchgängige Kanäle aus.

Der ringförmige Rollenkörper enthält auf der Mantelfläche insbesondere eine Mehrzahl von entlang der Drehrichtung des Rollenkörpers nacheinander bzw. hintereinander und voneinander beabstandet angeordnete Unterdrucköffnungen. Die Unterdrucköffnungen sind insbesondere in einer, senkrecht zur Drehachse verlaufenden Ebene angeordnet. Die Unterdrucköffnungen sind insbesondere ausgehend von der Achse radial nach aussen zur Mantelfläche hin gerichtet.

Die Unterdrucköffnungen sind in Drehrichtung insbesondere derart voneinander beanbstandet angeordnet, dass die Durchlassöffnung unabhängig von der Winkelstellung des Rollenkörpers immer mit mindestens einer Unterdrucköffnung einen durchgängigen Kanal ausbildet.

Dadurch wird gewährleistet, dass an der Mantelfläche der Rolle zum Förderraum hin trotz drehendem Rollenkörper permanent ein Unterdruck aufrechterhalten wird.

Der ringförmige Rollenkörper kann ferner insbesondere eine Mehrzahl von parallel zur Drehachse des Rollenkörpers nebeneinander und voneinander beabstandet angeordnete Unterdrucköffnungen enthalten. Dadurch wird gewährleistet, dass über die gesamte förderwirksame Breite der Rolle an der Mantelfläche ein Unterdruck erzeugt werden kann. Die förderwirksame Breite der Rolle entspricht jener Breite der Rolle, auf welcher die Fördergüter der Rolle aufliegen und einen Förderkontakt mit der Rolle eingehen können.

Durch die Drehung des Rollenkörpers wird die mindestens eine Unterdrucköffnung, sobald diese in den Förderraum gerichtet ist, an der mindestens einen Durchlassöffnung vorbei bewegt und bildet mit dieser einen durchgängigen Kanal aus. Der durchgängige Kanal ist insbesondere radial ausgerichtet.

Enthält der Rollenkörper mehrere, entlang der Drehrichtung hintereinander angeordnete Unterdrucköffnungen, so wird spätestens, wenn eine Unterdrucköffnung an der Durchlassöffnung vorbeibewegt ist und der durchgängige Kanal wieder aufgehoben ist, die nachfolgende Unterdrucköffnung unter Ausbildung eines durchgängigen Kanals an der Durchlassöffnung vorbeigeführt. Auf diese Weise bildet die Durchlassöffnung mit mindestens einer Unterdrucköffnung immer einen durchgängigen Kanal aus.

Grundsätzlich können auch zwei Unterdrucköffnungen oder mehr als zwei Unterdrucköffnungen gleichzeitig mit der mindestens einen Durchlassöffnung einen durchgängigen Kanal ausbilden. Dies triff insbesondere auf die Übergangsphase zu, wenn eine vorlaufende Unterdrucköffnung im Begriff ist, den Einflussbereich der Durchlassöffnung zu verlassen, und eine nachfolgende Unterdrucköffnung in den Einflussbereich der Durchlassöffnung bewegt wird.

Gemäss einer Weiterbildung der Erfindung weist die Durchlassöffnung an der Aussenfläche der Achse entlang der Drehrichtung des Rollenkörpers bzw. in einer Ebene quer zur Drehachse betrachtet eine grössere Ausdehnung bzw. Breite auf als die Unterdrucköffnung.

Die Ausdehnung der Durchlassöffnung an der Aussenfläche der Achse definiert den Drehstellungsbereich, in welchem die Durchlassöffnung mit der Unterdrucköffnung einen durchgängigen Kanal ausbildet.

Gemäss einer Weiterbildung der Erfindung ist die Rolle bzw. der Rollenkörper zur Herstellung eines kraftübertragenden Reibkontaktes bzw. Haftreibungskontaktes mit einem auf der Rolle aufliegenden Fördergut mindestens teilweise von mindestens einem flexiblen Kraftübertragungselement umschlungen.

Das mindestens eine Kraftübertragungselement ist insbesondere in einer am Aussenumfang der Rolle bzw. des Rollenkörpers in Drehrichtung umlaufenden Nut geführt. Die Mantelfläche der Rolle bzw. des Rollenkörpers ist folglich strukturiert.

Das mindestens eine flexible Kraftübertragungselement zeichnet sich insbesondere durch seine hohe Haftreibung aus, welche die Mitnahme eines der Rolle aufliegenden Förderguts bzw. die Übertragung einer Mitnahmekraft auf das Fördergut begünstigt.

Das mindestens eine flexible Kraftübertragungselement ist insbesondere aus Kunststoff. Das Kraftübertragungselement kann z. B. aus einem Elastomer, Gummi, Naturkautschuk oder Polyurethan sein. Das Kraftübertragungselement kann auch mehrschichtig bzw. mehrlagig ausgebildet sein und insbesondere einer der oben genannten Werkstoffe enthalten.

Die teilweise Umschlingung der Rolle liegt insbesondere in jenem Mantelabschnitt der Rolle bzw. des Rollenkörpers vor, welcher über eine Auflagefläche hinaus in den Förderraum ragt.

Das Kraftübertragungselement kann die Rolle als flexibler Ringkörper jedoch auch vollständig umschlingen.

Gemäss einer Weiterbildung der Erfindung ist beidseits der mindestens einen Unterdrucköffnung und insbesondere beidseits von mehreren in Drehrichtung hintereinander entlang der Mantelfläche in einer gemeinsamen Ebene angeordneten Unterdrucköffnungen jeweils ein Kraftübertragungselement angeordnet.

Dank dem flexiblen Kraftübertragungselement ist die Rolle in der Lage auch auf ein starres Fördergut, wie z. B. ein Paket, eine ausreichende Mitnahmekraft auszuüben, was zum Beispiel mittels Unterdrucks nicht gelingt. Dies, aufgrund des fehlenden Anschmiegens des starren Fördergutes an die Mantelfläche der Rolle bzw. des Rollenkörpers.

Somit ist die Rolle in der Lage sowohl über das flexible Kraftübertragungselement als auch über den an der mindestens einen Unterdrucköffhung erzeugten Unterdruck eine Mitnahmekraft auf ein der Rolle aufliegendes Fördergut auszuüben. Je nach Eigenschaft des Fördergutes, z. B. flexibel oder starr, erfolgt die Mitnahmekraft überwiegend über die am flexiblen Kraftübertragungselement wirkende Haftreibung oder über den an der Unterdrucköffnung wirkende Unterdruck.

Die Erfindung betrifft ferner auch eine Anordnung für den Einsatz in einer Förderanlage zum Lenken von liegend über die Anordnung geförderten Fördergüter mit mindestens einer antreibbaren Rolle wie oben beschrieben sowie mit mindestens einem Antrieb zum Antreiben der mindestens einen Rolle um ihre Drehachse. Die Achse der Rolle ist in der Anordnung relativ zur geometrischen Drehachse insbesondere unbeweglich gelagert.

Das Lenken der liegend geförderten Fördergüter durch die Anordnung ist mit einer Änderung der Lage der Fördergüter im Förderraum verbunden. Entsprechend kann die Anordnung auch als Lageänderungsanordnung bezeichnet werden.

Die Anordnung enthält insbesondere eine Schwenkeinrichtung zum Schwenken der mindestens einen antreibbaren Rolle um eine senkrecht zur Drehachse der mindestens einen Rolle angeordneten Schwenkachse. Die Schwenkachse ist insbesondere senkrecht zu einer Auflagefläche bzw. Förderfläche oder Förderebene angeordnet.

Die Anordnung enthält insbesondere ein flächiges Auflageorgan, welches eine, insbesondere ebene, Auflagefläche für die Fördergüter ausbildet. Das Auflageorgan weist insbesondere mindestens eine Ausnehmung bzw. Öffnung auf, in welche die mindestens eine antreibbare Rolle eingelassen ist, derart dass diese mit einem Mantelflächenabschnitt der Auflagefläche des Auflageorgans in Richtung des Förderraums vorsteht. Die Schwenkachse ist hierbei insbesondere senkrecht zur Auflagefläche angeordnet ist. Das Auflageorgan ist insbesondere stationär, d.h. unbeweglich. Das Auflageorgan ist insbesondere starr. Das Auflageorgan kann als Auflagetisch ausgebildet sein. Das Auflageorgan kann aus einem oder mehreren Plattenelementen, insbesondere aus Blechen, bestehen.

Das flächige Auflageorgan fluchtet insbesondere mit dem Förderorgan einer angrenzenden Fördervorrichtung.

Gemäss einer besonderen Ausführung der Erfindung schneidet sich die Schwenkachse der mindestens einen Rolle nicht mit der Drehachse der mindestens einen Rolle.

Die mindestens eine Rolle ist durch die Schwenkeinrichtung entsprechend lenkbar. Es kann daher auch von einer Lenkrolle gesprochen werden.

Die mindestens eine Rolle kann über einen Antriebsriemen, welcher die Rolle mindestens teilweise umschlingt, angetrieben werden. Der Antriebsriemen wird beispielsweise über eine Antriebsrolle, Antriebsachse oder Antriebswalze angetrieben.

Es können mehrere, insbesondere nebeneinander angeordnete, Rollen mittels jeweils mindestens einem Antriebsriemen über eine gemeinsame Antriebsrolle, Antriebsachse oder Antriebswalze angetrieben werden.

Die Rolle kann auch über eine Antriebsrolle direkt angetrieben werden. Es können mehrere, insbesondere nebeneinander angeordnete, Rollen mittels einer gemeinsamen Antriebsrolle, Antriebsachse oder Antriebswalze direkt angetrieben werden. Mehrere Rollen können jeweils auch über eine separate Antriebsrolle, Antriebsachse oder Antriebswalze direkt angetrieben werden. Die Antriebsrollen, Antriebsachsen oder Antriebswalzen können allerdings, z. B. über einen Riemen, eine Kette oder Zahnräder, antriebstechnisch gekoppelt sein.

Der Riemenantrieb weist den Vorteil auf, dass die mindestens eine Rolle um die Schwenkachse geschwenkt werden kann, ohne dass auch die Antriebsrolle, Antriebsachse bzw. Antriebswalze mitgeschwenkt werden muss. Das Schwenken der mindestens einen Rolle führt vielmehr zu einer Verdrehung des Antriebsriemens. Dies ist jedoch dem Antrieb nicht abträglich, wenn der Abstand zwischen der Rolle (Lenkrolle) und Antriebsrolle, Antriebsachse bzw. Antriebswalze genügend gross ist.

Gemäss einer Weiterbildung der Erfindung ist das oben genannte Kraftübertragungselement als Antriebsriemen ausgebildet. Die mindestens eine Rolle wird hierbei über das die Rolle mindestens teilweise umschlingenden Kraftübertragungselement angetrieben. Entsprechend hat das Kraftübertragungselement eine Doppelfunktion, nämlich die Ausübung einer Mitnahmekraft auf ein der Rolle aufliegendes Fördergut und der Antrieb der Rolle um die Drehachse.

Das Kraftübertragungselement bzw. der Antriebsriemen kann als Flachriemen, Keilriemen oder Rundriemen ausgebildet sein.

Gemäss einer Weiterbildung der Erfindung ist die mindestens eine Rolle Teil eines Rollenmoduls. Entsprechend enthält die Anordnung mindestens ein Rollenmodul und insbesondere eine Mehrzahl von Rollenmodulen. Die Rollenmodule können in Förderrichtung betrachtet in Kolonnen hintereinander und in Reihen nebeneinander, d.h. in einem Matrix-Muster angeordnet sein.

Das Rollenmodul enthält jeweils mindestens eine antreibbare Rolle, insbesondere mehrere antreibbaren Rollen. So kann das Rollenmodul beispielsweise vier antreibbare Rollen enthalten.

Die Rollenmodule sind insbesondere in Ausnehmungen bzw. Öffnungen im Auflageorgan der Anordnung eingelassen. Die Rollenmodule selbst können einen Auflagekörper mit mindestens einer Ausnehmung bzw. Öffnung zur Aufnahme der mindestens einen Rolle aufweisen. Der Auflagekörper bildet zum Förderraum hin eine, insbesondere ebene, Auflagefläche aus. Der Auflagekörper kann aus einem Plattenelement, wie Blech, bestehen oder dieses enthalten.

Das Auflageorgan der Anordnung und der Auflagekörper des in das Auflageorgan eingelassenen Rollenmoduls sind insbesondere bündig und bilden eine gemeinsame Auflagefläche aus. Aus dieser gemeinsamen Auflagefläche heraus ragt die mindestens eine Rolle des mindestens einen Rollmoduls mit einem Mantelabschnitt in den Förderraum.

Die Rollen eines Rollenmoduls können durch einen gemeinsamen Antrieb angetrieben werden. Die Rollen oder Gruppen von Rollen eines Rollenmoduls können aber auch durch separate Antriebe angetrieben werden.

Gemäss einer Weiterbildung der Erfindung enthält jeweils jedes Rollenmodul einen Antrieb zum Antreiben der Rollen des jeweiligen Rollenmoduls. Der Antrieb oder Teile davon können allerdings auch ausserhalb des Rollenmoduls in der Anordnung angeordnet sein.

Die Rollen eines Rollenmoduls können über eine gemeinsame Schwenkeinrichtung schwenkbar sein. Entsprechend sind die Rollen eines Rollenmoduls insbesondere immer gleichgerichtet.

Gemäss einer Weiterbildung der Erfindung enthält jeweils jedes Rollenmodul eine Schwenkeinrichtung zum Schwenken der Rollen des jeweiligen Rollenmodus. Die Schwenkeinrichtung oder Teile davon können allerdings auch ausserhalb des Rollenmoduls in der Anordnung angeordnet sein.

Gemäss einer Weiterbildung der Erfindung ist das Rollenmodul selbst durch eine Schwenkeinrichtung schwenkbar. Entsprechend schwenken auch die Rollen des Rollenmoduls zusammen mit dem Rollenmodul.

Das Rollenmodul weist gemäss dieser Weiterbildung insbesondere einen kreisförmigen Auflagekörper auf, welcher eine kreisförmige Auflagefläche ausbildet. Der kreisförmige Auflagekörper ist um die Schwenkachse drehbar in einer kreisförmigen Ausnehmung bzw. Öffnung im Auflageorgan der Anordnung schwenkbar bzw. drehbar gelagert. Solche Rollenmodule werden auch als Drehteller bezeichnet.

Das Rollenmodul kann für sämtliche Rollen des Rollenmoduls eine gemeinsame Anschlussschnittstelle zum Unterdruckerzeuger aufweisen. Das Rollenmodul kann allerdings auch mehrere Anschlussschnittstellen für jede Rolle oder für Gruppen von Rollen eines Rollenmoduls aufweisen.

Gemäss einer Weiterbildung der Erfindung sind bei einem Rollenmodul jeweils mindestens zwei Rollen über eine gemeinsame Achse mittels einer gemeinsamen Anschlussschnittstelle mit dem Unterdruckerzeuger verbindbar. Entsprechend sind die Rollenkörper der mindestens zwei Rollen auf der gemeinsamen Achse voneinander beabstandet angeordnet.

Die Anordnung enthält im Weiteren insbesondere eine Unterdruckeinrichtung zur Erzeugung eines Unterdrucks an der Mantelfläche der mindestens einen Rolle. Die Unterdruckeinrichtung umfasst insbesondere Leitungen, wie flexible Schläuche, zum Erzeugen eines Unterdrucks an der Mantelfläche der Rolle, welche mit einem Unterdruckerzeuger verbindbar sind. Der Unterdruckerzeuger kann ebenfalls Teil der Anordnung sein.

Da Förderanlagen in der Regel bereits einen Unterdruckerzeuger für andere Anwendungen enthalten, ist es auch denkbar, dass der Unterdruckerzeuger ausserhalb der Anordnung in der Förderanlage angeordnet ist.

Die Anordnung kann als separate Vorrichtung ausgebildet sein, welche z.B. als Förder- und Lenkvorrichtung bzw. -modul zum Lenken von liegend geförderten Fördergütern in einer Förderanlage, z. B. zwischen mindestens zwei Fördervorrichtungen, angeordnet sein kann. Solche Förderanlagen weisen in der Regel einen modularen Aufbau auf.

Die Anordnung kann allerdings auch Teil einer Fördervorrichtung zur liegenden Förderung von Fördergütern selbst sein. So können die Rollen bzw. Rollenmodule der Anordnung in das Förderorgan der Fördervorrichtung integriert sein und mit dem Förderorgan mitbewegt werden.

Die Verbindung der Rollen zum Unterdruckerzeuger kann über einen Gleitkontakt, insbesondere einen seitlichen Gleitkontakt erfolgen. Dieser stellt die Verbindung der in Fördergeschwindigkeit in Förderrichtung bewegten Anschlussschnittstelle mit der ortsfesten Unterdruckleitung her. Der Gleitkontakt kann in Form einer parallel zur Förderrichtung des Förderorgans angeordneten Unterdruckleiste ausgebildet sein.

Im Weiteren betrifft die Erfindung auch eine Förderanlage mit mindestens einer Fördervorrichtung zum liegenden Fördern von Fördergütern, sowie mit einer Anordnung wie oben beschrieben zum Lenken der liegend geförderten Fördergüter parallel zur Förderfläche bzw. in der Förderebene.

Die Fördervorrichtung enthält ein flächiges Förderorgan, welches eine Förderfläche zum liegenden Fördern der Fördergüter ausbildet. Die Förderfläche wird bei einer ebenen Förderfläche auch Förderebene genannt.

Das Förderorgan der Fördervorrichtung kann ein Förderband eines Bandförderers, eine Plattenkette eines Plattenkettenförderers, ein Modulband eines Modulbandförderers, eine Mattenkette eines Mattenkettenförderers oder eine Rollenbahn sein.

Die Anordnung bzw. die Förderanlage enthält insbesondere auch eine Steuerungseinrichtung zum Schwenken der Rollen bzw. der Rollenmodule um die Schwenkachse. Die Rollen können über die Steuerungsrichtung in eine beliebige Schwenkstellung schwenkbar sein. Es kann auch vorgesehen sein, dass die Rollen über die Steuerungseinrichtung nur zwischen definierten Schwenkstellungen schwenkbar sind. Entsprechend werden die Schwenkstellungen der Rollen über die Steuerungseinrichtung geschaltet.

Die Rollen lassen sich insbesondere einzeln oder in Gruppen und insbesondere unabhängig von den anderen Rollen bzw. von den anderen Gruppen von Rollen der Anordnung schwenken bzw. schalten. Bei Rollenmodulen lassen sich diese insbesondere einzeln, d.h. unabhängig von anderen Rollenmodulen der Anordnung schwenken bzw. schalten.

Die Steuerungseinrichtung dient insbesondere auch zum Antreiben der Rollen um ihre Drehachse. So können über die Steuerungseinrichtung insbesondere die Geschwindigkeit und gegebenenfalls auch der Drehsinn der Rollen gesteuert werden.

So können die Fördergüter neben dem Schwenken der Rollen auch durch die Geschwindigkeit oder den Drehsinn, insbesondere durch unterschiedliche Geschwindigkeiten bzw. durch unterschiedlichen Drehsinn der Rollen, gelenkt werden.

Die Rollen lassen sich insbesondere einzeln oder in Gruppen unabhängig von den anderen Rollen bzw. von den anderen Gruppen von Rollen der Anordnung antreiben. Bei Rollenmodulen lassen sich die Rollen eines Rollenmoduls insbesondere gemeinsam, jedoch insbesondere unabhängig von den Rollen anderer Rollenmodule der Anordnung antreiben.

Die Steuerungseinrichtung dient insbesondere auch zum Erzeugen eines Unterdrucks an den Mantelflächen der Rollen. Der Unterdruck lässt sich beispielsweise an einzelnen Rollen oder an Gruppen von Rollen und unabhängig von den anderen Rollen bzw. von den anderen Gruppen von Rollen der Anordnung erzeugen. Bei Rollenmodulen lässt sich der Unterdruck insbesondere gemeinsam an den Rollen eines Rollenmoduls erzeugen, jedoch insbesondere unabhängig von den Rollen anderer Rollenmodule der Anordnung.

Die Erfindung betrifft auch ein Verfahren zum Lenken von liegend geförderten Fördergütern mit einer oben beschriebenen Anordnung.

Das Verfahren zeichnet sich dadurch aus, dass im Bereich der mindestens einen Unterdrucköffnung an der Mantelfläche der mindestens einen angetriebenen Rolle ein Unterdruck erzeugt wird, welcher auf ein gefördertes Fördergut, das der mindestens einen angetriebenen Rolle aufliegt, eine Halte- und Mitnahmekraft ausübt, derart dass das Fördergut durch Schwenken der mindestens einen angetriebenen Rolle um die Schwenkachse aus seiner bisherigen Förderrichtung abgelenkt wird.

Unter Förderrichtung bzw. bisheriger Förderrichtung ist insbesondere eine Hauptförderrichtung gemeint, in welcher die Fördergüter zur Anordnung bzw. Lageänderungsanordnung gefördert werden.

Die Halte- und Mitnahmekraft wirkt besonders gut auf ein flexibles Stückgut oder auf ein in einer flexiblen Verpackungshülle verpacktes Stückgut.

Hierzu wird über einen Unterdruckerzeuger im Innenhohlraum der Achse ein Unterdruck erzeugt, welcher sich durch den aus der Durchlassöffnung in der Achse und der Unterdrucköffnung im Rollenkörper gebildeten, durchgängigen Kanal zur Mantelfläche der Rolle fortsetzt. Entsprechend herrscht auf der Mantelfläche im Bereich der Unterdrucköffnung ein Unterdruck bzw. Saugzug. Ein der angetriebenen Rolle aufliegendes Fördergut bleibt durch den Unterdruck bzw. Saugzug an der Rolle haften und wird durch die Rolle in Drehrichtung der Rolle weitergefördert.

Der Unterdruck wirkt nur auf die in einem begrenzten Drehstellungsbereich in Drehrichtung entlang der Mantelfläche angeordneten Unterdrucköffnungen. Dies, aufgrund des in Drehrichtung begrenzten Ausdehnung der zum Förderraum hin gerichteten Durchlassöffnung. Der Drehstellungsbereich bzw. Drehwinkelbereich kann einen Kreissektor von 25-40°, insbesondere um 30° (Winkelgrad) aufspannen. Der Drehstellungsbereich ist insbesondere im Scheitelbereich der Rolle angeordnet, in welchem die Rolle maximal über die Auflagefläche in den Förderraum ragt.

Da der Drehstellungsbereich begrenzt ist, ist auch die Haftung des Fördergutes an der Rolle lediglich temporär. Das Fördergut wird mit fortschreitender Förderung ausgangs des Drehstellungsbereichs wieder von der Rolle gelöst bzw. abgeschält und weitergefördert.

Gemäss einer Weiterbildung der Erfindung weist ein Kraftübertragungselements, welches die Rolle zum Förderraum hin mindestens teilweise umschlingt eine erhöhte Haftreibung auf ein gefördertes, insbesondere starres, Fördergut aus, welches der mindestens einen angetriebenen Rolle aufliegt. Das Fördergut wird durch Schwenken der mindestens einen angetriebenen Rolle um die Schwenkachse über die auf das Fördergut wirkende Mitnahmekraft entsprechend aus seiner bisherigen Förderrichtung abgelenkt.

Die erfindungsgemässe, antreibbare Rolle bzw. die erfindungsgemässe Anordnung mit der mindestens einen antreibbaren Rolle, wie oben beschrieben, findet insbesondere Verwendung als Förderweiche in einer Förderanlage zum liegenden Fördern von Fördergütern. Die Förderweiche lenkt die Fördergüter insbesondere von einem Zuförderer auf jeweils einen von zwei oder mehr als zwei abzweigenden Weiterförderer.

Die erfindungsgemässe, antreibbare Rolle bzw. die erfindungsgemässe Anordnung mit der mindestens einen antreibbaren Rolle, wie oben beschrieben, findet insbesondere Verwendung in einer Förderanlage zum liegenden Fördern von Fördergütern als Positioniereinrichtung zum Ändern der Position der Fördergüter im Förderraum. Die Positionsänderung kann eine Lageänderung der Fördergüter quer zur Förderrichtung sein. Die Positionsänderung kann eine durch Beschleunigen oder Abbremsen der Fördergüter ausgelöste Lageänderung parallel zur Förderrichtung im Förderraum sein und dadurch insbesondere ein Distanzieren bzw. Annähern der Fördergüter relativ zueinander oder relativ zu Teilen der Fördervorrichtung. Die Positionsänderung kann auch ein Drehen der Fördergüter im Förderraum sein. Kombinationen der genannten Positionsänderungen sind auch denkbar.

Das Drehen eines Fördergutes im Förderraum, kann durch unterschiedliche Schwenkbewegungen der Rollen bzw. der Rollenmodule erfolgen, welchen das Fördergut aufliegt.

Das Drehen eines Fördergutes im Förderraum, kann auch durch unterschiedliche Drehgeschwindigkeiten bzw. Drehzahlen und/oder durch einen unterschiedlichen Drehsinn der Rollen bzw. der Rollen der Rollenmodule erfolgen, welchen das Fördergut aufliegt.

Eine Kombination von unterschiedlichen Schwenkbewegungen, Geschwindigkeiten bzw. Drehsinn der Rollen bzw. der Rollen der Rollenmodule zum Drehen der Fördergüter ist ebenfalls denkbar.

Die erfindungsgemässe, antreibbare Rolle bzw. die erfindungsgemässe Anordnung mit der mindestens einen antreibbaren Rolle, wie oben beschrieben, findet insbesondere Verwendung in einer Förderanlage zum liegenden Fördern von Fördergütern als Beschickungseinrichtung zum Beschicken einer Fördervorrichtung der Förderanlage mit Fördergütern.

Die erfindungsgemässe, antreibbare Rolle bzw. die erfindungsgemässe Anordnung mit der mindestens einen antreibbaren Rolle, wie oben beschrieben, findet insbesondere Verwendung in einer Förderanlage zum liegenden Fördern von Fördergütern als Abgabeeinrichtung zum Abgeben von Fördergütern von einer Fördervorrichtung der Förderanlage. Die Förderanlage kann entsprechend eine Sortieranlage für Fördergüter sein.

Die Förderanlage mit einer erfindungsgemässen Anordnung kann insbesondere auch zum Kommissionieren von Waren, insbesondere von Versandwaren, in der Intralogistik ausgelegt sein.

Dank der erfindungsgemässen Rolle und der dazugehörigen Anordnung lassen sich auch leichte, flexible bzw. biegsame Fördergüter bzw. in flexible Hüllen verpackte Fördergüter zuverlässig in der Förderebene lenken. Dies trifft insbesondere auch bei hohen Fördergeschwindigkeit zu, wenn höhere Trägheitskräfte und aerodynamische Effekte kontrollierte Richtungsänderungen der Fördergüter in der Förderebene bzw. Förderfläche erschweren.

Das bestehende Konzept einer auf angetriebenen und schwenkbaren Rollen basierten Lenkung von Fördergütern in einer Förderebene bzw. Förderfläche erfordert dank vorliegender Erfindung keine tiefgreifenden Anpassungen an der Förderanlage. Einzig die Lenkrollen sind mit einer entsprechenden Unterdruckeinrichtung auszustatten und dementsprechend zu modifizieren. Da der Unterdruckerzeuger in der Regel bereits vorhanden ist, müssen ferner nur die entsprechenden Verbindungleitungen zum Unterdruckerzeuger bereitgestellt werden.

Im Folgenden wird der Erfindungsgegenstand anhand von bevorzugten Ausführungsbeispielen, welche in den beiliegenden Figuren dargestellt sind, näher erläutert. Es zeigen jeweils schematisch:
- Figur 1:: eine perspektivische Ansicht einer erfindungsgemässen Rolle;
- Figur 2:: eine Seitenansicht der Rolle nach Figur 1;
- Figur 3:: eine Querschnittsansicht des Rollenkörpers der Rolle nach Figur 1 längs zur Drehachse;
- Figur 4a-e:: Querschnittsansichten der Rolle nach Figur 1 quer zur Drehachse;
- Figur 5:: eine Querschnittsansicht der Rolle nach Figur 1 längs zur Drehachse;
- Figur 6:: eine Seitenansicht einer Rollenanordnung;
- Figur 7:: eine kombinierte Seiten- und Querschnittsansicht eines Rollenantriebs;
- Figur 8:: eine Seitenansicht eines weiteren Rollenantriebs;
- Figur 9:: eine Querschnittsansicht eines weiteren Rollenantriebs;
- Figur 10:: eine Querschnittsansicht eines weiteren Rollenantriebs;
- Figur 11:: eine Querschnittsansicht eines weiteren Rollenantriebs;
- Figur 12:: eine Querschnittsansicht eines weiteren Rollenantriebs;
- Figur 13:: perspektivische Ansichten von Rollenmodulen in verschiedenen Schwenkstellungen;
- Figur 14a-c:: perspektivische Ansichten einer Lageänderungsanordnung in einer Förderanlage mit Rollenmodulen in verschiedenen Schwenkstellungen;
- Figur 15a-d:: Draufsichten einer Lageänderungsanordnung in einer Förderanlage mit Rollenmodulen in verschiedenen Schwenkstellungen;
- Figur 16:: eine Draufsicht einer Förderanlage mit Förderweiche;
- Figur 17:: eine Draufsicht einer Sortieranlage mit einer Mehrzahl von Abgabeeinrichtungen zum Abgeben von Fördergütern;
- Figur 18:: perspektivische Ansicht einer weiteren Förderanlage mit einer Lageänderungsanordnung in Funktion einer Förderweiche;
- Figur 19:: Förderanlage nach Figur 18 mit einer alternativen Umlenkung der Fördergüter.

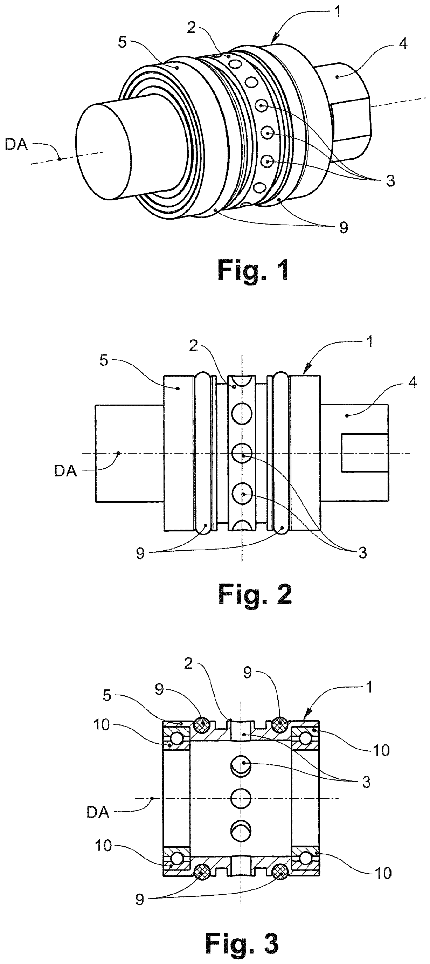

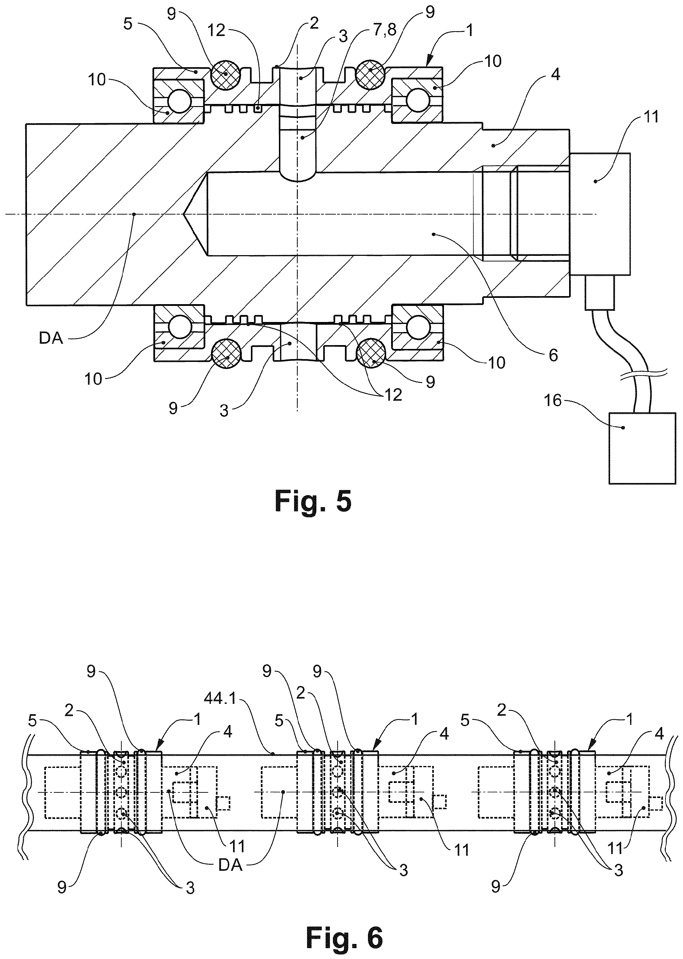

Die Rolle 1 gemäss den **Figuren 1 bis 5** enthält eine Achse 4 und einen über Kugellager 10 um die Achse 4 drehbar gelagerten ringförmigen Rollenkörper 5. Zwischen dem Rollenkörper 5 und der Achse 4 ist eine Spaltdichtung 12 angeordnet. Die Achse 4 weist einen Innenhohlraum 6 auf, welcher über eine Anschlussschnittstelle 11 mit einem Unterdruckerzeuger 16 verbunden ist (siehe Figur 5). Die Anschlussschnittstelle 11 und der Unterdruckerzeuger 16 sind Teil einer Unterdruckeinrichtung. Vom Innenhohlraum 6 der Achse 4 führt eine Durchlassöffnung 7 radial nach aussen.

Der Rollenkörper 5 weist eine Mantelfläche 2 auf. In die Mantelfläche 2 münden eine Mehrzahl von Unterdrucköffnungen 3, welche ausgehend von der Achse 4 radial nach aussen zur Mantelfläche 2 hin gerichtet sind. Die Unterdrucköffnungen 3 sind ringförmig und gleichmässig voneinander beabstandet um die Achse 4 angeordnet. Entsprechend liegen die Unterdrucköffnungen 3 in einer gemeinsamen, senkrecht zur Drehachse DA des Rollenkörpers 5 angeordneten Ebene. Eine gleichmässige Anordnung der Unterdrucköffnungen 3 entlang der Mantelfläche 2 führt zu einem gleichmässig auf der Mantelfläche 2 wirkenden Unterdruck.

Beidseitig von den ringförmig angeordneten Unterdrucköffnungen 3 umschlingt jeweils ein Kraftübertragungselement 9 in Ausführung eines ringförmigen Kunststoffelements mit Kreisquerschnitt den Rollenkörper 5. Das Kraftübertragungselement 9 verläuft jeweils in einer ringförmigen Aussennut, welche parallel zur Drehrichtung DR der Rolle 1 in die Mantelfläche 2 des Rollenkörpers 5 eingelassenen ist.

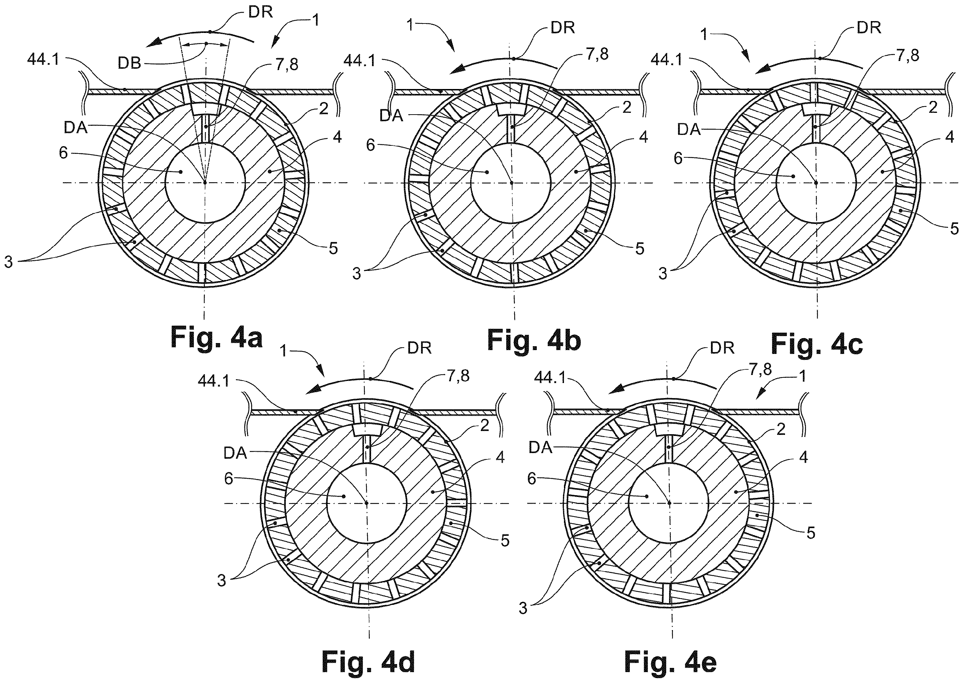

Durch Drehen des Rollenkörpers 5 relativ zur Achse 4 bewegen sich die Unterdrucköffuungen 3 an der Durchlassöffnung 7 vorbei (siehe **Figuren 4a bis 4e****).** Trifft eine Unterdrucköffnungen 3 auf die Durchlassöffnung 7 so wird ein durchgängiger Kanal 8 ausgebildet, welcher einen im Innenhohlraum 6 der Achse 4 erzeugten Unterdruck zur Mantelfläche 2 weiterleitet.

Die Durchlassöffnung 7 weist an der Aussenfläche der Achse 4 in Drehrichtung DR des Rollenkörpers 5, wo diese auf den Rollenkörper 5 bzw. auf die Unterdrucköffnung 3 im Rollenkörper trifft, eine grössere Ausdehnung bzw. Breite auf als die Unterdrucköffnung 3. Dadurch wird der durchgängige Kanal 8 zwischen Durchlassöffnung 7 und der jeweiligen Unterdrucköffnung 3 nicht nur in einer einzigen Drehstellung des Rollenköpers 5, sondern über einen Drehstellungsbereich bzw. Drehwinkelbereich DB ausgebildet (siehe Figur 4a).

Aus den Figuren 4a bis 4e ist zu entnehmen, wie eine Unterdrucköffnung 3 mit der Drehung des Rollenkörpers 5 um die Achse 4 entlang eines Kreisbogens über die Durchlassöffnung 7 hinweg bewegt wird und mit dieser temporär einen durchgängigen Kanal 8 ausbildet. Die Breite der Durchlassöffnung 7 an der Aussenfläche der Achse 4 in Drehrichtung DR des Rollenkörpers 5 liegt innerhalb eines Drehstellungsbereichs bzw. Drehwinkelbereich DB, welcher einen Kreissektor mit dem oben genannten Kreisbogen aufspannt. Die Unterdrucköffnung 3 bildet nun innerhalb dieses Drehstellungsbereichs DB einen durchgängigen Kanal 8 mit der Durchlassöffnung 7 aus.

Gleichzeitig mit Verlassen des Drehstellungsbereichs DB und somit mit der Aufhebung des durchgängigen Kanals 8 tritt eine nachfolgende Unterdrucköffnung 3 in den Drehstellungsbereichs DB ein und bildet von Neuem einen durchgängigen Kanal 8 mit der stationären Durchlassöffnung 7 aus. Damit ist gewährleistet, dass im Drehstellungsbereich immer ein durchgängiger Kanal 8 ausgebildet wird.

Es wird folglich lediglich im Drehstellungsbereichs über mindestens eine Unterdrucköffnung 3 ein Unterdruck im Bereich der Mantelfläche 2 ausgebildet.

Es ist möglich, dass sich zwei oder sogar mehr als zwei Unterdrucköffnungen 3 gleichzeitig im Drehstellungsbereich DB befinden und im Bereich der Mantelfläche 2 einen Unterdruck ausbilden.

Der ortsfeste Drehstellungsbereich DB ist zum Förderraum hin gerichtet. Der durch den Drehstellungsbereich DB definierte Kreisbogen der Mantelfläche 2 befindet sich oberhalb einer Auflagefläche 44.1 im Förderraum.

Die **Figur 6** zeigt eine Lageänderungsanordnung mit mehreren Rollen 1 gemäss den Figuren 1 bis 3, welche in Ausnehmungen eines flächigen Auflageorgans 44.1 eingelassen sind und mit einem Rollenabschnitt über die Auflagefläche des Auflageorgans 44.1 hinaus in den Förderraum ragen.

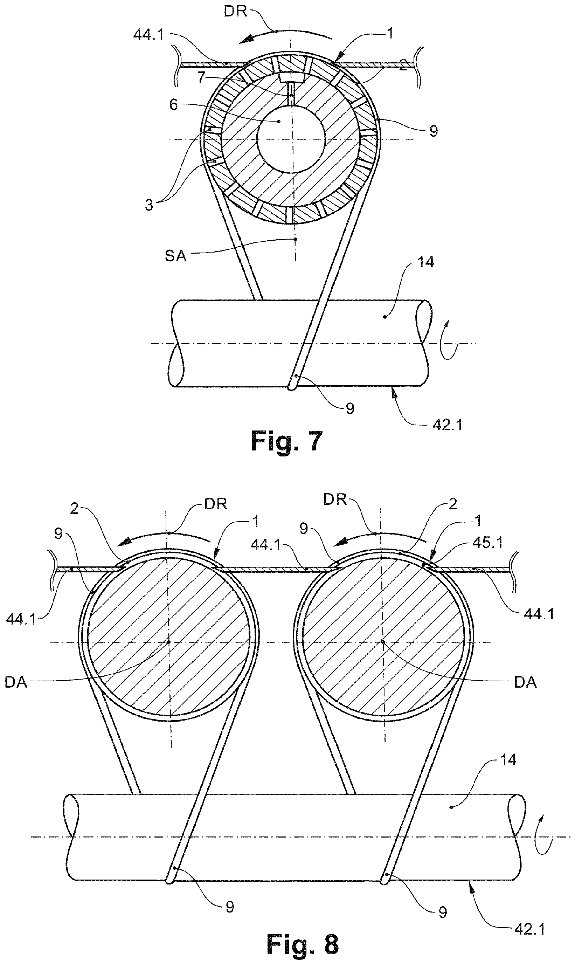

Die **Figuren 7 bis 12** zeigen verschiedene Ausführungsformen zum Antreiben der erfindungsgemässen Rollen 1, nachfolgend Lenkrollen 1 genannt, wie sie zum Beispiel anhand der Figuren 1 bis 6 beschrieben wurde.

Die Ausführungsformen gemäss den Figuren 7 bis 10 zeichnen sich durch einen Riemenantrieb 42.1, 42.2, 42.3 mit einem umlaufenden, d.h. endlosen Antriebsriemen 9, 13 aus. Der Riemenantrieb 42.1, 42.2, 42.3 umfasst eine angetriebene Antriebsrolle bzw. Antriebwelle 14, welche teilweise vom Antriebsriemen 9, 13 umschlungen wird. Der Antriebsriemen 9, 13 umschlingt wiederum die Lenkrolle 1 teilweise. Die Antriebskraft zum Drehen der Lenkrollen 1 wird von der Antriebsrolle bzw. Antriebwelle 14 über den Antriebsriemen 9, 13 auf die Lenkrolle 1 übertragen.

Die Ausführungsformen gemäss den Figuren 7 bis 9 haben auch gemeinsam, dass der Antriebsriemen 9 gleichzeitig auch dem Kraftübertragungselement zur Ausübung einer Mitnahmekraft auf ein der Lenkrolle 1 aufliegendes Fördergut 20 entspricht. Entsprechend ist der Antriebsriemen 9 über den in den Förderraum ragenden Rollenabschnitt der Lenkrolle 1 geführt.

Gemäss der Ausführungsfonn nach **Figur 7** umschlingt der Antriebsriemen 9, welcher ein Rundriemen sein kann, eine ortsfeste Antriebswelle 14. Die Antriebswelle 14 ist unterhalb der Lenkrolle 1 angeordnet. Durch das Schwenken der Lenkrolle 1 um die Schwenkachse SA wird der Antriebsriemen 9 verdreht. Dies hat den Vorteil, dass die Antriebswelle 14 selbst nicht mitgeschwenkt werden muss.

Die Anordnung gemäss der **Figur 8** entspricht der Ausführungsform nach Figur 7 mit dem Unterschied, dass zwei Lenkrollen 1 über eine gemeinsame Antriebswelle 14 angetrieben werden. In der Figur 8 ist auch das Auflageorgan 44.1 dargestellt, aus welchem die Lenkrollen 1 in den Förderraum hervorragen. Die Antriebswelle 14 ist, wie auch in Figur 7, unterhalb der Lenkrolle 1 und somit unterhalb des Auflageorgans 44.1 und des Förderraums angeordnet.

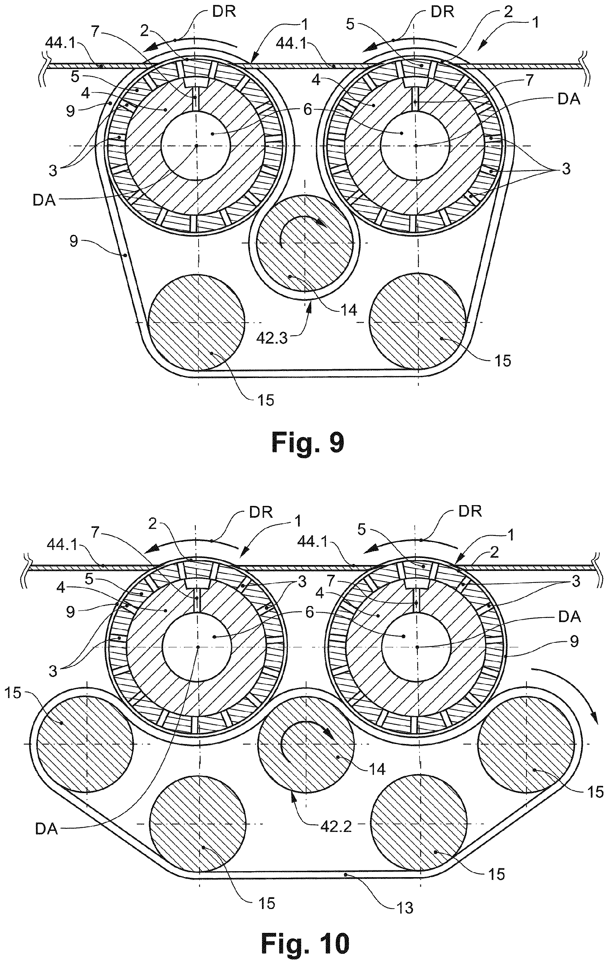

Gemäss der Ausführungsform nach **Figur 9** werden zwei benachbarte Lenkrollen 1 durch einen gemeinsamen Antriebsriemen 9 angetrieben. Der Antriebsriemen 9 wiederum wird von einer Antriebsrolle 14 angetrieben. Die Antriebsrolle 14 ist zwischen den Drehachsen DA der zwei Lenkrollen 1 sowie unterhalb der durch die beiden Drehachsen DA führenden Rollenmittelebene angeordnet.

Der Antriebsriemen 9 wird über eine erste Umlenkrolle 15 nach oben zu einer ersten Lenkrolle 1 hin umgelenkt und umschlingt die Lenkrolle 1 unter anderem im Bereich eines Drehstellungsbereichs. Das heisst, der Antriebsriemen 9 umschlingt analog zu Figur 7 und 8 den über die Förderfläche in den Förderraum ragende Rollenabschnitt der ersten Lenkrolle 1. Auf der anderen Rollenseite wird der Antriebsriemen 9 nach Umschlingung von mehr als der Hälfte des Rollenumfangs der ersten Lenkrolle 1 wieder nach unten geführt und umschlingt die Antriebsrolle 14 teilweise. Im Anschluss an die teilweise Umschlingung der Antriebsrolle 14, welche über 2/3 des Rollenumfangs beträgt, wird der Antriebsriemen wieder nach oben umgelenkt. Dieser umschlingt nun die zweite Lenkrolle 1 unter anderem im Drehstellungsbereich. Das heisst, der Antriebsriemen 9 umschlingt analog zur ersten Lenkrolle 1 den über die Förderfläche in den Förderraum ragende Rollenabschnitt der zweiten Lenkrolle 1. Auf der anderen Rollenseite wird der Antriebsriemen 9 nach Umschlingung von mehr als der Hälfte des Rollenumfangs der zweiten Lenkrolle 1 wieder nach unten zu einer zweiten Umlenkrolle 15 hin gelenkt. An der zweiten Umlenkrolle 15 wird der Antriebsriemen 9 wieder zur ersten Umlenkrolle 15 hin umgelenkt.

Diese Ausführungsform zeichnet sich durch einen grossen Umschlingungswinkel sowohl bei den beiden Lenkrollen 1 als auch bei der Antriebsrolle 14 aus.

Gemäss der Ausführungsform nach **Figur 10** werden ebenfalls zwei benachbarte Lenkrollen 1 durch einen gemeinsamen Antriebsriemen 13 angetrieben. Der Antriebsriemen 13 wiederum wird von einer Antriebsrolle 14 angetrieben. Die Antriebsrolle 14 ist analog zur Ausführungsform nach Figur 9 zwischen den Drehachsen DA der zwei Lenkrollen 1 sowie unterhalb der durch die beiden Drehachsen DA führenden Rollenmittelebene angeordnet.

Im Gegensatz zur Ausführungsform nach Figur 9 wir der Antriebsriemen 13 jedoch unterhalb der Lenkrollen 1 geführt und insbesondere nicht durch den in den Förderraum weisenden Drehstellungsbereich der Lenkrollen 1 bzw. nicht über den über die Förderfläche in den Förderraum ragenden Rollenabschnitt geführt.

Der Antriebsriemen umschlingt vielmehr in einem horizontal ausgerichteten Wellenmuster abwechselnd eine Umlenkrolle 15 bzw. Antriebsrolle 14 und eine Lenkrolle 1 teilweise. So wird der Antriebsriemen 13 zuerst oberhalb einer ersten Umlenkrolle 15, anschliessend unterhalb einer ersten Lenkrolle 1, dann oberhalb der Antriebsrolle 14, dann wieder unterhalb der zweiten Lenkrolle 1 und anschliessend wieder oberhalb einer zweiten Umlenkrolle 15 durchgeführt. Jede der genannten Lenkrollen 1, 14, 15 wird vom Antriebsriemen 13 teilweise umschlungen.

Die vorliegende Ausführungsform zeichnet sich dadurch aus, dass der Riemenantrieb 42.2 komplett unterhalb des Auflageorgans 44.1 angeordnet ist.

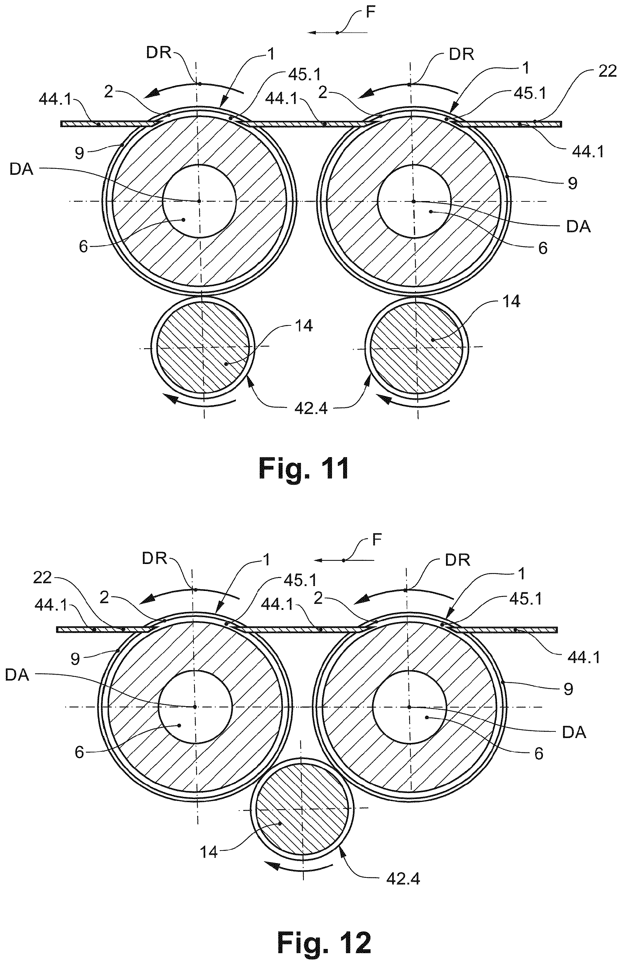

Gemäss der Ausführungsform nach **Figur 11** wird die Lenkrolle 1 direkt durch eine Antriebsrolle 14 eines Antriebs 42.4 angetrieben. Diese ist an einem unteren Scheitelpunkt der Lenkrolle 1 angeordnet. Im vorliegenden Fall werden zwei benachbarte Lenkrollen 1 jeweils über separate Antriebsrollen 14 angetrieben. Die beiden Antriebsrollen 14 können allerdings z. B. über einen Riemen, eine Kette oder Zahnräder antriebstechnisch gekoppelt sein.

Gemäss der Ausführungsform nach **Figur 12** werden zwei benachbarte Lenkrollen 1 direkt durch eine gemeinsame Antriebsrolle 14 eines Antriebs 42.4 angetrieben. Die Antriebsrolle 14 ist analog zu den Ausführungsformen nach Figur 9 und 10 zwischen den Drehachsen DA der zwei Lenkrollen 1 sowie unterhalb der durch die beiden Drehachsen DA führenden Rollenmittelebene angeordnet. Dies, mit dem Unterschied, dass die Antriebsrolle 14 gemäss Figur 12 die Lenkrollen 1 direkt antreibt.

Die Antriebsrolle 14 bildet entsprechend zu jeder der Lenkrollen 1 einen, insbesondere linienförmigen Antriebskontakt aus

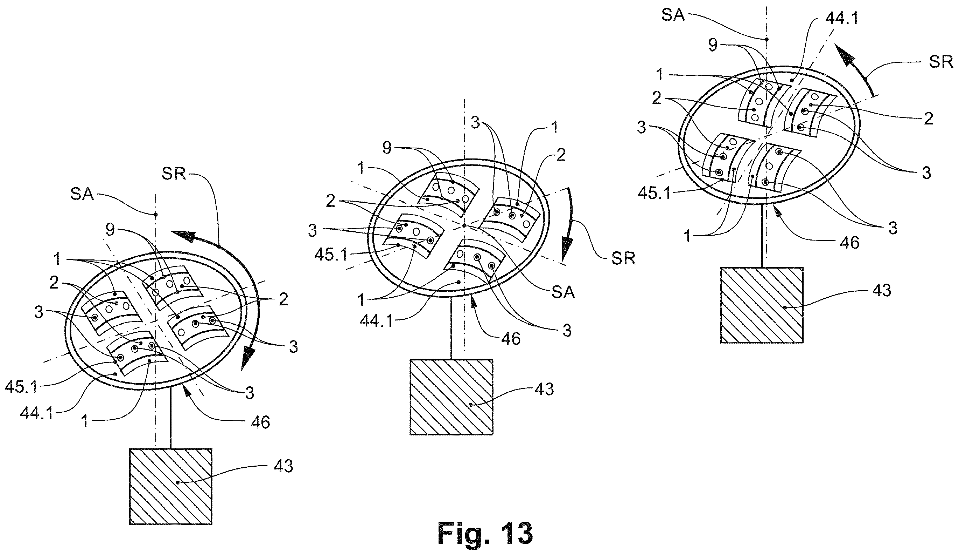

Die **Figur 13** zeigt ein als Drehteller ausgebildetes Rollenmodul 46 in verschiedenen Schwenkstellungen. Das Rollenmodul 46 enthält einen kreisförmigen bzw. tellerförmiges Auflagekörper 44.1 mit vier Ausnehmungen 45.1, in welchen jeweils eine Rolle 1 eingelassen ist. Die Rollen 1 stehen der Auflagefläche des Auflagekörpers 44.1 mit einem Rollenabschnitt vor, derart, dass ein auf dem Rollenmodul 46 aufliegendes Fördergut 20 von den Rollen 1 getragen wird.

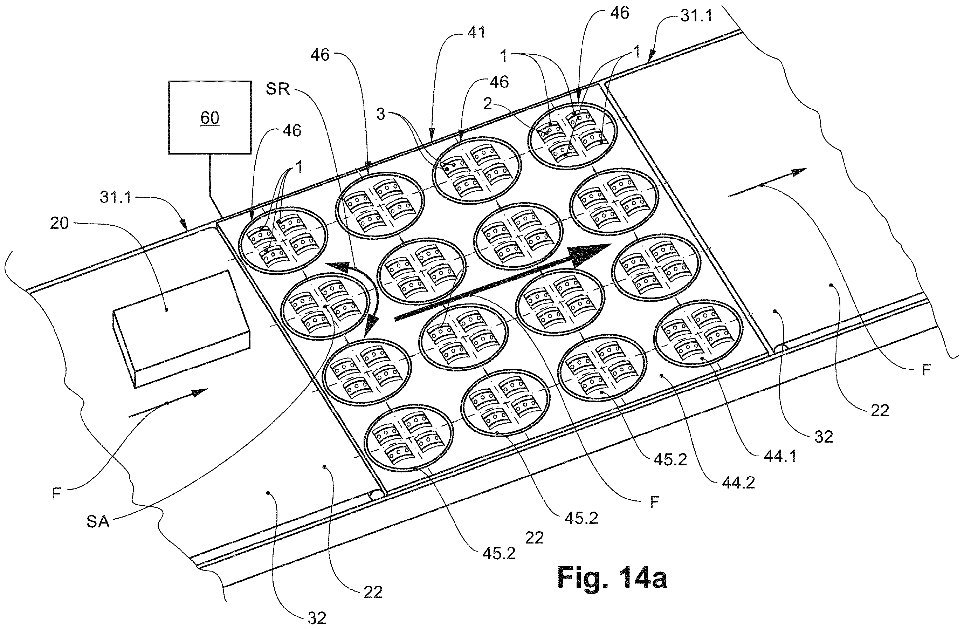

Das Rollenmodul 46 ist über eine Schwenkeinrichtung 43 um eine Schwenkachse SA in Schwenkrichtung SR schwenkbar gelagert (siehe auch Figur 14a-14e). Das Schwenken der Rollen 1 findet also über ein Schwenken des Rollenmoduls 46 statt.

Die **Figuren 14a bis 14c** zeigen eine Ausführungsform einer erfindungsgemässen Lageänderungsanordnung 41 mit einem flächigem Auflageorgan 44.2, in welchem über Ausnehmungen 45.2 eine Mehrzahl von in Kolonnen und Reihen und voneinander gleichmässig beabstandete Rollenmodule 46 mit kreisförmigem Auflagekörper 44.1, wie im Zusammenhang mit Figur 13 bereits beschrieben, eingelassen sind.

Die Auflageflächen der Auflagekörper 44.1 sind bündig mit der Auflagefläche des Auflageorgans 44.2 angeordnet Die Auflageflächen der Auflagekörper 44.1 und des Auflageorgans 44.2 liegen folglich in einer gemeinsamen Auflageebene.

Die Rollenmodule 46 sind gegenüber dem Auflageorgan 44.2 um die Schwenkachse SA schwenkbar gelagert.

In der Figur 14a verläuft die Tangentialdrehrichtung DR der Rollen 1 parallel zur Hauptförderrichtung F. Die Fördergüter 20 werden entsprechend durch die Rollen 1 bzw. die Rollenmodule 46 der Lageänderungsanordnung 41 in Hauptförderrichtung F gefördert.

Die Lageänderungsanordnung 41 und entsprechend die Schwenkposition der Rollenmodule 46 wird über eine Steuerungseinrichtung 60 gesteuert. Ferner können über die Steuerungseinrichtung 60 auch die Drehgeschwindigkeit bzw. Drehzahl der einzelnen Rollen 1 bzw. der Rollen 1 eines Rollenmoduls 46 sowie deren Drehsinn gesteuert werden.

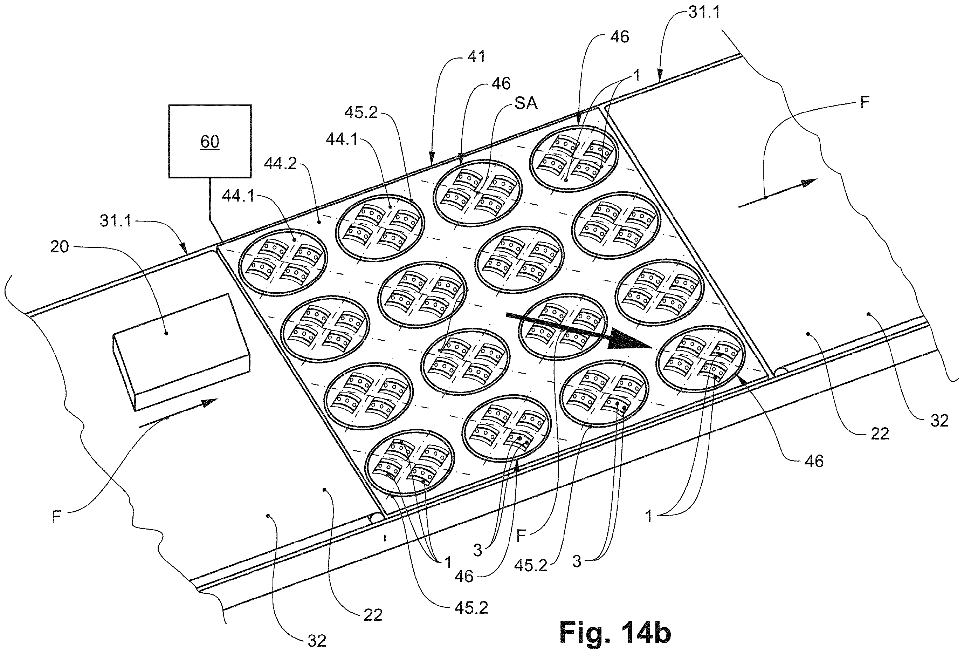

In der Figur 14b sind die Rollen 1 bzw. die Rollenmodule 46 nach recht geschwenkt und die Tangentialdrehrichtung DR der Rollen 1 verläuft in einem Winkel zur Hauptförderrichtung F und weist in Hauptförderrichtung F betrachtet nach rechts.

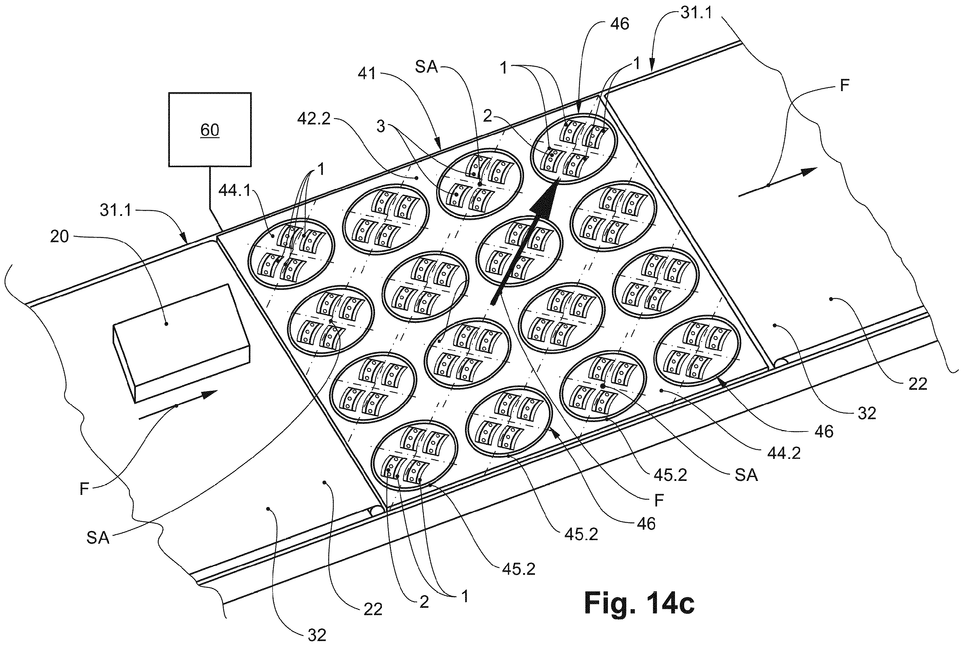

In der Figur 14c sind die Rollen 1 bzw. die Rollenmodule 46 nach links geschwenkt und die Tangentialdrehrichtung DR der Rollen 1 verläuft ebenfalls in einem Winkel zur Hauptförderrichtung F, weist allerdings in Hauptförderrichtung F betrachtet nach links.

Stromaufwärts vor der Lageänderungsanordnung 41 ist ein Zuförderer 31.1 mit einem flächigen Förderorgan 32, wie Förderband, mit einer Förderfläche 22 angeordnet, auf welcher die Fördergüter 20 in Hauptförderrichtung F der Lageänderungsanordnung 41 zugefördert werden. Stromabwärts, im Anschluss an die Lageänderungsanordnung 41 ist ein Weiterförderer 31.1 mit einem flächigen Förderorgan 32, wie Förderband, mit einer Förderfläche 22 angeordnet, auf welcher von der Lageänderungsanordnung 41 übergebenen Fördergüter 20 in Hauptförderrichtung F weitergefördert werden.

Die Förderflächen 22 des Zu- und Weiterförderers 31.1 sind mit der Auflagefläche des Auflageorgans 44.2 der Lageänderungsanordnung 41 insbesondere bündig, d.h. die Flächen liegen in einer Ebene.

Die Lageänderungsanordnung 41 gemäss den Figuren 14a bis 14c kann zum Beispiel zum Ausschleusen bzw. Abgeben von Fördergütern 20 an einer Ausschleusstation bzw. Abgabestation eingesetzt werden.

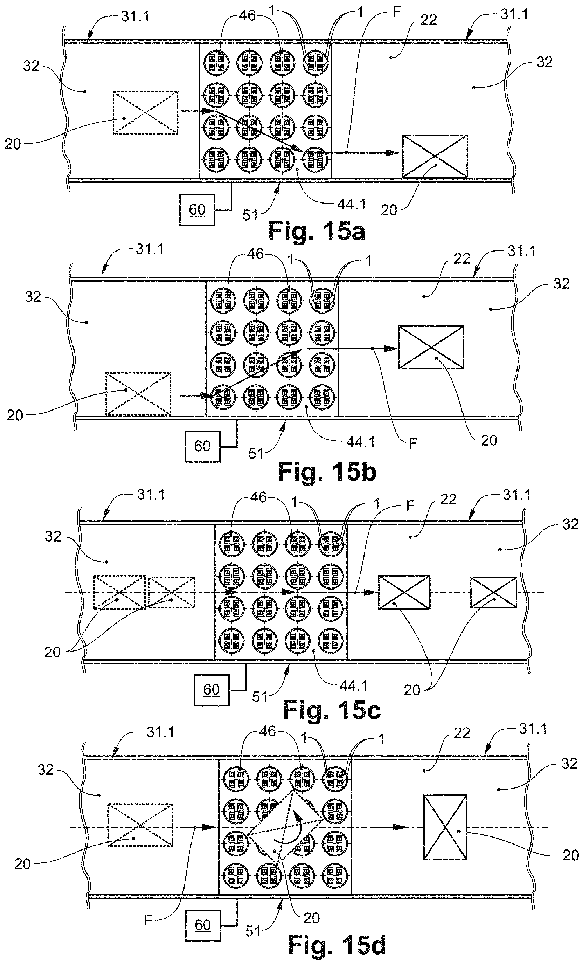

Gemäss der Ausführungsform nach **Figur 15a bis 15d** ist die Lageänderungsanordnung, wie sie beispielsweise in den Figuren 14a bis 14c gezeigt ist, eine Positioniereinrichtung 51 zum Positionieren der Fördergüter 20 im Förderraum eines Förderers 31.1 zum liegenden Fördern von Fördergütern 20, wie Bandförderer.

Das Positionieren kann eine Lageänderung der Fördergüter 20 quer zur Hauptförderrichtung F durch Schwenken der Rollenmodule 46 sein (siehe Figur 15a und 15b).

Das Positionieren kann auch eine Lageänderung der Fördergüter 20 entlang der Hauptförderrichtung F relativ zu einem anderen Fördergut 20 durch Beschleunigen oder Abbremsen der Fördergüter 20 über die Rollenmodule 46 sein (siehe Figur 15c).

Das Positionieren kann auch ein Drehen der Fördergüter 20 durch individuelles Schwenken der Rollenmodule 46 sein (siehe Figur 15d).

Ferner kann ein Drehen des Fördergutes 20 auch über unterschiedliche Drehgeschwindigkeiten der einzelnen Rollen 1 bzw. der Rollen 1 eines Rollenmoduls 46 sowie durch einen unterschiedlichen Drehsinn der Rollen, auf welchen das Fördergut 20 aufliegt, erfolgen.

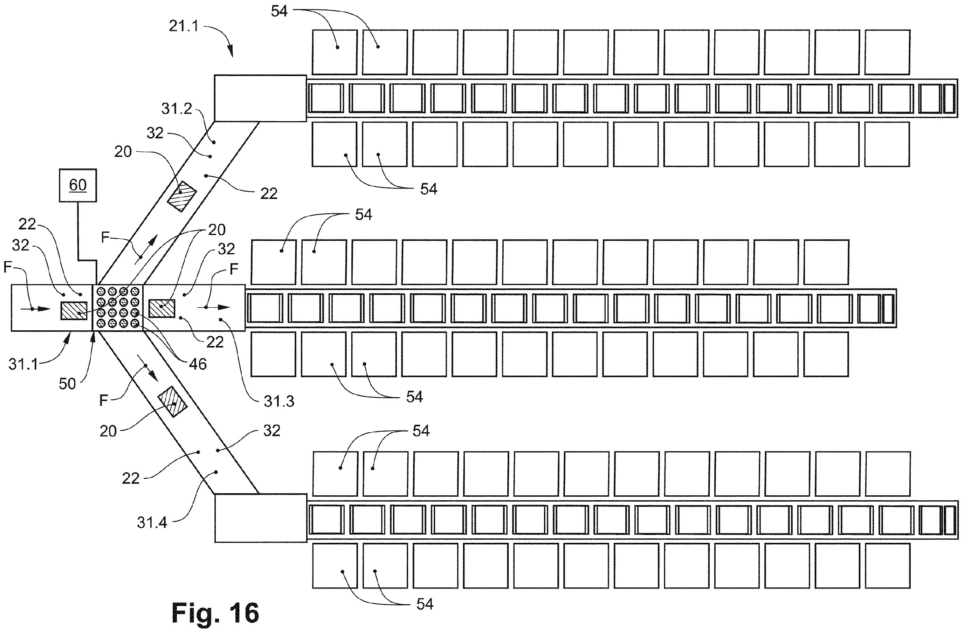

Die **Figur 16** zeigt eine Förderanlage 21.1 mit einer Lageänderungsanordnung, wie sie beispielsweise in den Figuren 14a bis 14c gezeigt ist, welche hier eine Förderweiche 50 zum Lenken der Fördergüter 20 von einem Zuförderer 31.1 auf jeweils einen Weiterförderer 31.2, 31.3, 31.4 des sich im Bereich der Förderweiche 50 verzweigenden Zuförderers 31.1. Je nach Schwenkstellung der Rollen 1 bzw. der Rollenmodule 46 werden die Fördergüter 20 nach links auf einen ersten, verzweigenden Weiterförderer 31.2, geradeaus auf einen zweiten, verzweigenden Weiterförderer 31.3 oder nach rechts auf einen dritten, verzweigenden Förderer 31.4 gelenkt.

Die drei Weiterförderer 31.2, 31.3, 31.4 fördern die Fördergüter 20 in diesem Beispiel jeweils in eine Abgabezone mit einer Mehrzahl von Abgabestationen 54, an welchen die Fördergüter 20 abgegeben werden können. Selbstverständlich kann die Förderweiche 50 auch für beliebig andere Anwendungen im Bereich der liegenden Förderung eingesetzt werden.

Die Förderweiche 50 wird entsprechend über eine Steuerungseinrichtung 60 gesteuert.

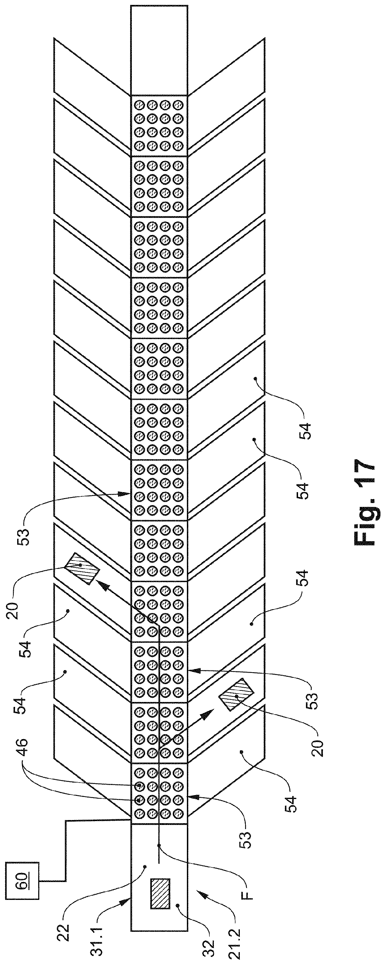

Die **Figur 17** zeigt eine Förderanlage 21.2, welche als Sortierer ausgelegt ist. Die Förderanlage 21.2 enthält einen Zuförderer 31.1 mit einem flächigen Förderorgan 32, zum liegenden Fördern der Fördergüter 20. Der Zuförderer 31.1 fördert die Fördergüter 20 in eine Abgabezone, welche eine Mehrzahl von hintereinander angeordneten Abgabestationen 54 aufweist. Die Fördergüter 20 können an den Abgabestationen 54 nach links oder rechts zur Seite abgegeben oder geradeaus weitergefördert werden. An jeder Abgabestation ist eine Lageänderungsanordnung angeordnet, welche die Funktion einer Abgabeeinrichtung 53 hat. Durch eine entsprechende Schwenkstellung der Rollen 1 bzw. der Rollenmodule 46 werden die Fördergüter 20 nach links oder rechts abgegeben oder geradeaus weitergefördert.

Die Abgabeeinrichtungen 53 werden entsprechend über eine Steuerungseinrichtung 60 gesteuert.

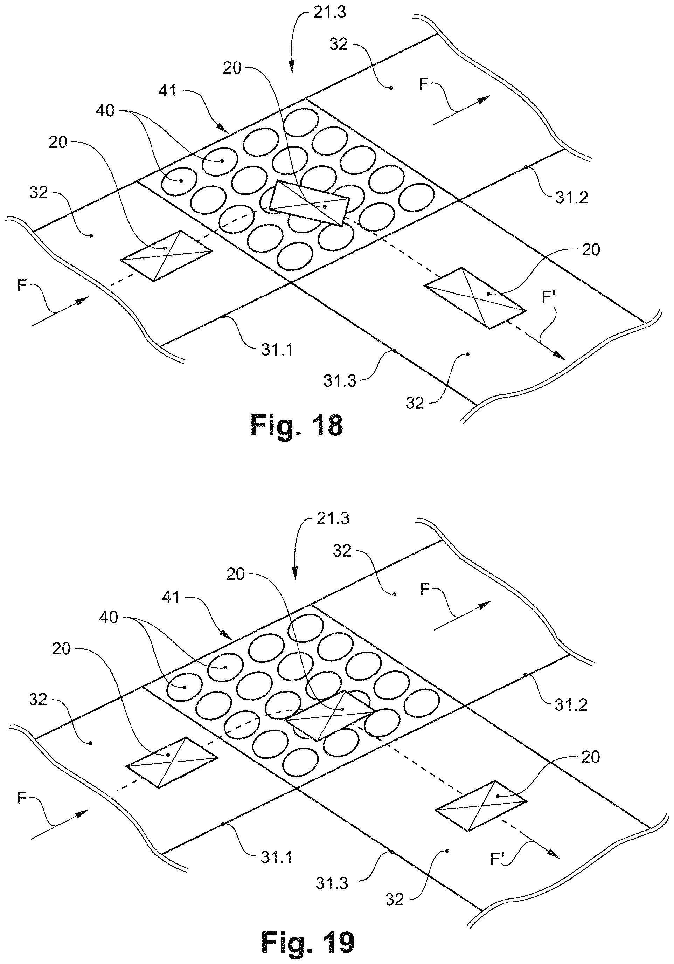

Die **Figuren 18** und **19** zeigen eine Förderanlage 21.3 mit einer Lageänderungsanordnung 41, wie sie beispielsweise in den Figuren 14a bis 14c gezeigt ist, welche hier eine Förderweiche zum Lenken der Fördergüter 20 von einem Zuförderer 31.1 auf jeweils einen Weiterförderer 31.2, 31.3 des sich im Bereich der Förderweiche verzweigenden Zuförderers 31.1 ausbildet. Der Zuförderer 31.1 und die beiden Weiterförderer 31.2, 31.3, weisen jeweils ein flächiges Förderorgan, wie Förderband, auf.

Die Förderrichtungen F, F' der beiden Weiterförderer 31.2, 31.3 liegen in einem rechten Winkel zueinander, wobei die Förderrichtung F eines ersten Weiterförderers 31.2 der Hauptförderrichtung F des Zuförderers 31.1 entspricht. Entsprechend wird das Fördergut 20 in einem rechten Winkel vom Zuförderer 31.1 auf den zweiten Wegförderer 31.3 umgelenkt.

Die Fördergüter 20 sind im vorliegenden Beispiel Briefe. Es können aber auch andere Fördergüter wie eingangs genannt sein.

Gemäss Figur 18 wird das Fördergut 20 beim Umlenken um 90° (Winkelgrade) gleichzeitig in die Förderrichtung F' des zweiten Wegförderers 31.3 mitgedreht, so dass die Längsachse des Förderguts 20 immer parallel zur aktuellen Förderrichtung verläuft. Die Lageänderung des Fördergutes 20 entspricht folglich einer Kombination aus einer Änderung der Förderrichtung um 90° (Winkelgrad) und einer Drehung des Fördergutes 20 ebenfalls um 90°.

Das Umlenken des Fördergutes 20 unter gleichzeitiger Drehung desselbigen erfolgt einerseits durch Schwenken der Rollen 1 bzw. der Rollenmodule 46 um eine Schwenkachse und andererseits durch unterschiedliche Drehzahlen der Rollen 1 bzw. der Rollen 1 der einzelnen Rollenmodulen 46, welchen das Fördergut 20 aufliegt. Gegebenenfalls können die Rollen 1 auch einen unterschiedlichen Drehsinn aufweisen.

Gemäss Figur 19 erfolgt beim Umlenken des Fördergutes 20 lediglich eine Änderung der Förderrichtung F des Förderguts 20 um 90° (Winkelgrad) ohne Änderung seiner Ausrichtung. Die Umlenkung erfolgt hier beispielsweise ausschliesslich durch Schwenken der betreffenden Rollen 1 bzw. der Rollenmodule 46, welchen das Fördergut 20 aufliegt, um die Schwenkachse.

## Patentansprüche

1. Antreibbare Rolle (1) mit einer Mantelfläche (2) für den Einsatz in einer Förderanlage (21) zum Lenken von liegend über die Rolle (1) hinweg geförderten Fördergüter (20),
**dadurch gekennzeichnet, dass**
die Rolle (1) mit einer Unterdruckeinrichtung (11) verbindbar ist und die Rolle (1) zum Erzeugen eines Unterdrucks im Bereich der Mantelfläche (2) mindestens eine Unterdrucköffnung (3) aufweist, welche in die Mantelfläche (2) der Rolle (1) mündet.

2. Rolle (1) gemäss Anspruch 1, **dadurch gekennzeichnet, dass** die Rolle (1) mit der mindestens eine Unterdrucköffnung (3) zur Ausübung einer Haltekraft auf das liegend geförderte Fördergut (20) ausgelegt ist.

3. Rolle (1) gemäss Anspruch 1 oder 2, **dadurch gekennzeichnet, dass** die Rolle (1) eine Achse (4) mit einem Innenhohlraum (6) und einen um die Achse (4) drehbar gelagerten, ringförmigen Rollenkörper (5) enthält, welcher die Mantelfläche (2) ausbildet.

4. Rolle (1) gemäss einem der Ansprüche 1 bis 3, **dadurch gekennzeichnet, dass** die Achse (4) mindesten eine vom Innenhohlraum (6) nach aussen zum ringförmigen Rollenkörper (5) führende Durchlassöffnung (7) aufweist, und die mindestens eine Durchlassöffnung (7) mit der mindestens einen Unterdrucköffnung (3) in einem definierten Drehstellungsbereich des Rollenkörpers (5) relativ zur Achse (4) einen durchgängigen Kanal (8) ausbilden und die Durchlassöffnung (7) insbesondere zu einem Förderraum (23) für Fördergüter (20) hin ausrichtbar ist.

5. Rolle (1) gemäss einem der Ansprüche 3 bis 4, **dadurch gekennzeichnet, dass** der ringförmige Rollenkörper (5) eine Mehrzahl von entlang der Drehrichtung (DR) des Rollenkörpers hintereinander und voneinander beabstandet angeordnete Unterdrucköffnungen (3) enthält.

6. Rolle (1) gemäss einem der Ansprüche 4 bis 5, **dadurch gekennzeichnet, dass** der ringförmige Rollenkörper (5) eine Mehrzahl von parallel zur Drehachse (DA) des Rollenkörpers (5) nebeneinander und voneinander beabstandet angeordnete Unterdrucköffnungen (3) enthält.

7. Rolle (1) gemäss einem der Ansprüche 4 bis 6, **dadurch gekennzeichnet, dass** entlang der Drehrichtung (DR) des Rollenkörpers (5) betrachtet die Durchlassöffnung (7) an der Aussenfläche der Achse (4) eine grössere Ausdehnung aufweist als die Unterdrucköffnung (3), und so einen Drehstellungsbereich (DB) definiert, in welchem die Durchlassöffnung (7) und die Unterdrucköffnung (3) einen durchgängigen Kanal (8) ausbilden.

8. **Anordnung** (41) für den Einsatz in einer Förderanlage (21) zum Lenken von liegend über die Anordnung (41) geförderten Fördergüter (20) mit mindestens einer antreibbaren Rolle (1) gemäss den Ansprüchen 1 bis 7 und mindestens einem Antrieb (12) zum Antreiben der mindestens einen Rolle (1) und insbesondere mit mindestens einer Schwenkeinrichtung (43) zum Schwenken der mindestens einen antreibbaren Rolle (1) um eine senkrecht zur Drehachse (DA) der mindestens einen Rolle (1) angeordneten Schwenkachse (SA)..

9. Anordnung (41) gemäss Anspruch 8, **gekennzeichnet durch** ein flächiges Auflageorgan (44), welches eine Auflagefläche für die Fördergüter (20) ausbildet, wobei das Auflageorgan (44) mindestens eine Ausnehmung (45.2) aufweist, in welche die mindestens eine antreibbare Rolle (1) eingelassen ist, derart dass diese mit einem Mantelflächenabschnitt der Auflagefläche vorsteht.

10. Anordnung (41) gemäss einem der Ansprüche 8 bis 9, **dadurch gekennzeichnet, dass** die Anordnung (41) mindestens ein Rollenmodul (46), insbesondere eine Mehrzahl von Rollenmodulen (46), mit jeweils mindestens einer antreibbaren Rolle (1), insbesondere mit mehreren antreibbaren Rollen (1), enthält.

11. Anordnung gemäss Anspruch 14, **dadurch gekennzeichnet, dass** das Rollenmodul (46) durch eine Schwenkeinrichtung (43) schwenkbar ist.

12. Anordnung gemäss einem der Ansprüche 8 bis 11, **gekennzeichnet durch** eine Unterdruckeinrichtung (11) zur Erzeugung eines Unterdrucks an der Mantelfläche (2) der mindestens einen Rolle (1).

13. **Förderanlage (21),** enthaltend eine Fördervorrichtung (31) zum liegenden Fördern von Fördergütern (20), sowie enthaltend eine Anordnung gemäss einem der Ansprüche 8 bis 12, zum Lenken der liegend geförderten Fördergütern (20).

14. **Verwendung** der antreibbaren Rolle (1) gemäss den Ansprüche 1 bis 7, und insbesondere der Anordnung gemäss den Ansprüchen 8 bis 12, in einer Förderanlage (21) zum liegenden Fördern von Fördergütern (20) für einen der folgenden Zwecke:
- als Förderweiche (50);
- als Positioniereinrichtung (51) zum Ändern der Position von Fördergütern (20) im Förderraum einer Fördervorrichtung, wie eine Lageänderung der Fördergüter (20) quer zur Förderrichtung (F) oder parallel zur Förderrichtung (F), insbesondere ein Distanzieren und/oder Annähern der Fördergüter, oder ein Drehen der Fördergüter (20);
- als Beschickungseinrichtung zum Beschicken einer Fördervorrichtung (31) der Förderanlage (21) mit Fördergütern (20);
- als Abgabeeinrichtung (53) zum Abgeben von Fördergütern (20) von einer Fördervorrichtung (31) der Förderanlage (21).

15. Verfahren zum Lenken von liegend geförderten Fördergütern (20) mit einer Anordnung gemäss den Ansprüchen 8 bis 12, **dadurch gekennzeichnet, dass** im Bereich der mindestens einen Unterdrucköffnung (3) an der Mantelfläche (2) der mindestens einen angetriebenen Rolle (1) ein Unterdruck erzeugt wird, welcher auf ein gefördertes Fördergut (20), das der mindestens einen angetriebenen Rolle (1) aufliegt, eine Halte- und Mitnahmekraft ausübt, derart dass das Fördergut (20) durch Schwenken der mindestens einen angetriebenen Rolle (1) um die Schwenkachse (SA) aus seiner bisherigen Förderrichtung (F) abgelenkt wird.
